# EUROPEAN PATENT APPLICATION

(11) **EP 4 851 478 A1**
(43) Date of publication of application: **09.12.2026**
(21) Application number: 26182863.6
(22) Date of filing: 03.06.2026
(51) Int. Cl.: F16D 48/06

(54) **LEANING VEHICLE**

(30) Priority: 04.06.2025 JP 2025093742
(71) Applicant: Yamaha Hatsudoki Kabushiki Kaisha, Iwata-shi, Shizuoka 438-8501 (JP)
(72) Inventor: MINAMI, Kengo, Iwata-shi, Shizuoka, 438-8501 (JP); OKUZUMI, Shinobu, Iwata-shi, Shizuoka, 438-8501 (JP)
(74) Representative: Stöckeler, Ferdinand

(57) **Abstract**

There is provided a vehicle that can prevent the occurrence of an engine stall due to locking of a drive wheel in each of a plurality of operations of a drive wheel brake under a special environment such as a race, while applying an effective engine brake to the drive wheel after release of the operation of the brake. A control device of the vehicle is configured to: when a state of a clutch is a connection state and a drive wheel brake is operating, cause an actuator to change the state of the clutch to a half-connection state that is between the connection state and a disconnection state when a rotation speed of an engine falls below a predetermined speed reference; when the operation of the drive wheel brake ends in the half-connection state of the clutch, and the rotation speed of the engine is lower than a corresponding engine rotation speed of the drive wheel, perform adjustment control for causing the actuator to adjust the state of the clutch from the half-connection state toward the connection state so as to increase an engine brake force for the drive wheel by the engine; and after detecting a locked state of the drive wheel when the drive wheel brake is operating, cause the half-connection state to be maintained without causing the actuator to adjust the state of the clutch from the half-connection state toward the connection state.

## Description

### Technical Field

The present teaching relates to a leaning vehicle.

### Background Art

Patent Literature 1 (PTL 1), for example, discloses a straddled vehicle including a clutch provided between an engine and a transmission mechanism, and a clutch actuator for driving the clutch. The vehicle includes an engine stall prevention unit that controls the clutch actuator to disconnect the clutch when a condition for rotation speed is satisfied. This prevents an engine stall.

### Citation List

### Patent Literature

PTL 1: JP-A-2014-035065

### Summary of Invention

### Technical Problem

When a drive wheel brake of a vehicle operates under a special environment such as a race, the drive wheel may become locked. For example, as in a handbrake turn in an automobile or a brake turn in a straddled vehicle, there is a method of traveling in which a rear wheel that is the drive wheel is positively locked under a special environment such as a race.

In a leaning vehicle, it may be desired to prevent the occurrence of an engine stall due to locking of a drive wheel in each of a plurality of operations of a drive wheel brake under a special environment such as a race, while applying an effective engine brake to the drive wheel after release of the operation of the brake.

An object of the present teaching is to provide a vehicle that can prevent the occurrence of an engine stall due to locking of a drive wheel in each of a plurality of operations of a drive wheel brake under a special environment such as a race, while applying an effective engine brake to the drive wheel after release of the operation of the brake.

### Solution to Problem

For example, in a situation where the rotation speed of an engine decreases as the vehicle speed decreases while the engine brake is functioning, when the rotation speed of the engine becomes lower than a predetermined speed, the state of the clutch is changed from a connection state to a half-connection state so as to prevent an engine stall.

The transmission force in the half-connection state of the clutch, which affects the strength of the engine brake, differs for each individual clutch. Depending on the individual clutch, a state called loss of engine brake may occur in which a substantial engine brake force is weak due to a low transmission force of the clutch.

Thus, it is conceivable to perform adjustment control for causing an actuator to adjust the state of the clutch from the half-connection state toward the connection state so as to increase the engine brake force in accordance with the speed of the drive wheel and the rotation speed of the engine. The adjustment control allows the engine brake to be exerted even when the operation of the drive wheel brake stops while the vehicle is moving forward in a locked state. That is, the state called loss of engine brake can be prevented.

However, after that, when the drive wheel brake operates again to lock the drive wheel again, the state of the clutch has been changed from the half-connection state toward the connection state, so that the rotation speed of the engine may decrease to cause the engine to stall during a time from detection of the locked state to return of the state of the clutch to the disconnection state. In this case, the engine may not stall in the first operation of the drive wheel brake, but may stall in the second operation of the drive wheel brake.

As a result of intensive studies on the prevention of an engine stall and the application of an effective engine brake to a drive wheel, the present inventors found that when locking of the drive wheel is detected, the stall can be prevented by maintaining the state of the clutch in the half-connection state without performing the adjustment control mentioned above.

By maintaining the state of the clutch in the half-connection state when locking of the drive wheel is detected, the time required for the state of the clutch to be changed to the disconnection state when the rotation speed of the drive wheel decreases due to re-locking of the drive wheel tends to be shorter, and the decrease in the rotation speed of the engine via the clutch tends to be slower even when the rotation speed of the drive wheel decreases rapidly. This prevents an engine stall. Therefore, it is possible to prevent the occurrence of an engine stall due to locking of the drive wheel in each of a plurality of operations of the drive wheel brake, while applying an effective engine brake to the drive wheel after release of the operation of the brake.

In order to achieve the above object, according to one aspect of the present teaching, a leaning vehicle includes the following configuration.
(1) A leaning vehicle including:
   an engine that outputs a driving force;
   a drive wheel that rotates by receiving the driving force of the engine;
   a drive wheel brake that brakes the drive wheel;
   a clutch that is provided between the engine and the drive wheel and includes a clutch actuator, the clutch being configured to change a state thereof between a connection state and a disconnection state by driving of the clutch actuator; and
   a control device that controls the engine and the clutch actuator,
   the control device being configured to:
      when the state of the clutch is the connection state and the drive wheel brake is operating, cause the clutch actuator to change the state of the clutch to a half-connection state that is between the connection state and the disconnection state when a rotation speed of the engine falls below a predetermined speed reference;
      when the operation of the drive wheel brake ends in the half-connection state of the clutch, and the rotation speed of the engine is lower than a corresponding engine rotation speed of the drive wheel, perform adjustment control for causing the clutch actuator to adjust the state of the clutch from the half-connection state toward the connection state so as to increase an engine brake force for the drive wheel by the engine; and
      after detecting a locked state of the drive wheel when the drive wheel brake is operating, cause the half-connection state to be maintained without causing the clutch actuator to adjust the state of the clutch from the half-connection state toward the connection state.

The leaning vehicle of (1) includes an engine, a drive wheel, a drive wheel brake, a clutch, and a control device. The engine outputs a driving force. The drive wheel rotates by receiving the driving force of the engine. The drive wheel brake brakes the drive wheel. The clutch is provided between the engine and the drive wheel and includes a clutch actuator. The clutch is configured to change a state thereof between a connection state and a disconnection state by driving of the clutch actuator. The engine and the clutch actuator are controlled by the control device.

The control device is configured to, when the state of the clutch is the connection state and the drive wheel brake is operating, cause the clutch actuator to change the state of the clutch to the half-connection state that is between the connection state and the disconnection state when the rotation speed of the engine falls below the predetermined speed reference. When the rotation speed of the engine falls below the predetermined speed reference, the state of the clutch is changed to the half-connection state. As a result, the occurrence of an engine stall can be prevented.

The transmission force that can be transmitted by the clutch in the half-connection state varies depending on the individual clutch. In the case of a clutch having a low transmission force in the half-connection state, the function of the engine brake is weak, and the speed of the drive wheel may increase beyond the actual rotation speed of the engine. That is, the rotation speed of the engine may become lower than a corresponding engine rotation speed of the drive wheel. The corresponding engine rotation speed of the drive wheel is the speed obtained by converting the rotation speed of the drive wheel to the engine rotation speed using a gear ratio or the like. The corresponding engine rotation speed of the drive wheel is hereinafter also simply referred to as the speed of the drive wheel.

The control device is configured to, when the operation of the drive wheel brake ends in the half-connection state of the clutch, and the rotation speed of the engine is lower than the speed of the drive wheel, perform adjustment control for causing the clutch actuator to adjust the state of the clutch from the half-connection state toward the connection state so as to increase an engine brake force for the drive wheel by the engine. The adjustment control allows the function of the engine brake to be exerted even when the rotation speed of the engine is lower than the speed of the drive wheel due to a low transmission force of the clutch in the half-connection state.

However, when the operation of the drive wheel brake is released after the decrease in the engine rotation speed due to locking of the drive wheel, the speed of the drive wheel increases, and the drive wheel speed temporarily exceeds the engine rotation speed, which actuates the adjustment control. Then, when the drive wheel is locked again, the rotation speed of the engine decreases rapidly with deceleration of the drive wheel via the clutch adjusted from the half-connection state toward the connection state. Therefore, a stall may occur because the rotation speed of the engine decreases, before the state of the clutch changes to the disconnection state when the rotation speed of the engine falls below the speed reference.

The control device of (1) is configured to, after detecting a locked state of the drive wheel when the drive wheel brake is operating, cause the half-connection state to be maintained without causing the actuator to adjust the state of the clutch from the half-connection state toward the connection state. The time required for the state of the clutch to return from the half-connection state to the disconnection state is shorter than the time required for the state of the clutch to return from the state adjusted toward the connection state to the disconnection state. In addition, when the clutch is in the half-connection state, the rotation speed of the engine tends to decrease slowly even in the locked state of the drive wheel. Therefore, even when the drive wheel is locked again, the occurrence of a situation is prevented in which a stall is caused because the time required for the state of the clutch to return to the disconnection state is later than the decrease in the rotation speed of the engine.

Therefore, according to (1), it is possible to prevent the occurrence of an engine stall due to locking of the drive wheel in each of a plurality of operations of the drive wheel brake, while applying an effective engine brake to the drive wheel after release of the operation of the brake.

According to one aspect of the present teaching, the leaning vehicle can employ the following configuration.

(2) The leaning vehicle according to (1), wherein
the control device is configured to, when the control device causes the clutch actuator to change the state of the clutch to the connection state or disconnection state after detecting the locked state, release the maintenance of the half-connection state in the state of the clutch.

When the clutch enters the connection state or disconnection state, the problem of the uncertainty of stall occurrence in the state where the clutch is in the half-connection state or the state adjusted from the half-connection state is unlikely to occur. Therefore, in such a case, it is permitted to reset the control and change the state of the clutch to the half-connection state.

The terminology used herein is for defining particular embodiments only and is not intended to be limiting the teaching. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. As used herein, the terms "attached," "connected," "coupled" and/or equivalents thereof are used in a broad sense, and include both of direct and indirect attachment, connection, and coupling. In addition, "connected" and "coupled" are not limited to physical or mechanical connections or couplings, and may include direct or indirect electrical connections or couplings. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art, and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present invention as defined by the appended claims.

This Description describes a novel leaning vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

A leaning vehicle is a straddled vehicle configured to be capable of turning in a leaning position. The straddled vehicle refers to a type of vehicle in which a driver straddles a saddle when seated. The leaning vehicle is configured to turn in a position tilting toward the center direction of the curve. Thus, the vehicle configured to be capable of turning in a leaning position counteracts the centrifugal force applied to the vehicle during turning. Examples of the leaning vehicle include an off-road type motorcycle. The leaning vehicle is not specifically limited, and may be, for example, an on-road type, a scooter type, or a moped type, or may be a three-wheeled motorcycle. Since agility is required in the leaning vehicle, running responsiveness to a start operation is regarded as important.

The drive wheel is, for example, a rear wheel, and the non-drive wheel is, for example, a front wheel. However, the drive wheel may be, for example, a front wheel, and the non-drive wheel may be, for example, a rear wheel.

Operation of the engine means that the engine outputs a driving force generated by combustion as a torque and a rotation speed of a crankshaft.

The drive wheel brake brakes the drive wheel. However, the drive wheel brake is not specifically limited, and may include, for example, a function of braking the front wheel other than the drive wheel. In addition, the vehicle may include, for example, a brake for braking the front wheel independently of the drive wheel brake. The drive wheel brake is operated by the operation of a lever or a pedal by the driver. However, the drive wheel brake is not specifically limited, and may be operated, for example, by the control of the control device that executes auto cruise control.

The state of the clutch is changed between the connection state and the disconnection state. The state of the clutch also includes an intermediate state between the connection state and the disconnection state. Changing the state of the clutch from the connection state includes changing the state to the disconnection state or the intermediate state. Output of the clutch actuator changes the state of the clutch without driving the shift operation of a dog transmission.

The half-connection state of the clutch is a state that is between the connection state and the disconnection state. More specifically, the half-connection state is a state closer to the disconnection state than a half-clutch state where the clutch slips while transmitting the driving force during operation of the engine brake. The half-connection state is a state where the driving force of the engine is transmitted when the engine brake is applied, and when a force for stopping the engine is applied from the drive wheel during the operation of the engine, the transmission of the force is prevented so that the engine does not stop. For example, when the force for stopping the engine is applied from the drive wheel by operation of the brake, the clutch in the half-connection state releases the force by slipping.

The control device is composed of, for example, a computer including a central processing unit (CPU) that executes a program and a memory that stores the program. However, the control device is not specifically limited, and may be composed of an electronic circuit that does not execute a program.

The adjustment control for adjusting the state of the clutch from the half-connection state toward the connection state is control for adjusting the state of the clutch to such an extent that the engine brake is substantially applied, regardless of the connection characteristics of the individual clutch. The adjustment control is control for bringing the state of the clutch to a state between the half-connection state and the connection state. The adjustment control adjusts the state of the clutch so that the clutch capacity increases. The adjustment control adjusts the state of the clutch so that a difference between the rotation speed of the engine and the rotation speed of the drive wheel converges.

The rotation speed of the drive wheel as compared to the rotation speed of the engine is a speed converted to the rotation speed of the engine using a gear ratio.

### Advantageous Effects of Invention

According to the present teaching, it is possible to provide a leaning vehicle that can prevent the occurrence of an engine stall due to locking of the drive wheel in each of a plurality of operations of the drive wheel brake, while applying an effective engine brake to the drive wheel after release of the operation of the brake.

### Brief Description of Drawings

[FIG. 1] A side view showing a schematic configuration of a vehicle according to an embodiment.
[FIG. 2] A flowchart illustrating clutch control operation during deceleration by the control device shown in FIG. 1.
[FIG. 3] Time charts showing one example of the clutch control operation. Description of Embodiments

Embodiments of the present teaching will be described below with reference to the drawings.

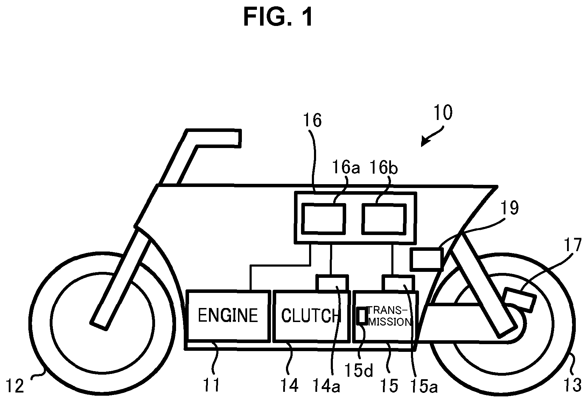

FIG. 1 is a side view showing a schematic configuration of a vehicle according to an embodiment. FIG. 1 shows a leaning vehicle as an example of a vehicle 10.

The vehicle 10 shown in FIG. 1 includes an engine 11, a drive wheel 13, a drive wheel brake 17, a clutch 14, and a control device 16. The vehicle 10 also includes a front wheel 12 and a dog transmission 15 (transmission).

The engine 11 outputs a driving force.

The drive wheel 13 is a rear wheel. The drive wheel 13 rotates by receiving the driving force of the engine 11.

The drive wheel brake 17 brakes the drive wheel 13. The drive wheel brake 17 operates in response to a driver's operation. The drive wheel brake 17 may include a function of braking the front wheel 12 other than the drive wheel, for example. The vehicle 10 may also include, for example, a brake for braking the front wheel 12 independently of the drive wheel brake 17.

The clutch 14 has a clutch actuator 14a. The clutch 14 changes the state of the driving force between a connection state and a disconnection state by driving of the clutch actuator 14a. In the clutch 14, a clutch plate (not shown) is displaced between a position corresponding to the connection state and a position corresponding to the disconnection state. The clutch 14 has a half-clutch state and a half-connection state between the connection state and the disconnection state. The half-connection state is a state between the half-clutch state and the disconnection state. That is, the half-clutch state is a state between the half-connection state and the connection state. That is, the state of the clutch 14 changes from the connection state to the half-clutch state, the half-connection state, and the disconnection state in this order. The clutch capacity in the half-clutch state is a capacity that can transmit the driving force from the engine 11, which increases when the vehicle 10 is started, to the drive wheel 13. The clutch capacity in the half-clutch state can also transmit the force of the engine brake to the drive wheel 13. The clutch capacity in the half-connection state is a capacity that can transmit the force of the engine brake to the drive wheel 13, but cannot transmit the driving force of the engine 11 that increases at the time of start.

The dog transmission 15 performs switching of a gear stage. The dog transmission 15 shifts up by engaging and disengaging a dog 15d. The dog transmission 15 also shifts down by engaging and disengaging the dog 15d. The dog transmission 15 transmits the driving force of the engine 11 as a transmission driving force to the drive wheel 13 via the engaged dog 15d.

The control device 16 controls the engine 11 and the clutch actuator 14a.

The control device 16 is composed of a computer including a central processing unit (CPU) 16a that executes a program and a memory 16b that stores the program. The central processing unit 16a controls the engine 11 and the clutch actuator 14a by reading and executing the program stored in the memory 16b.

The control device 16 controls the engine 11 and the clutch actuator 14a. For example, the control device 16 controls the clutch actuator 14a based on the rotation speed of the engine 11 and the state of the drive wheel brake 17.

The control device 16 causes the shift actuator 15a to shift up or down the dog transmission 15 in accordance with at least the rotation speed of the engine 11. Thus, the gear stage is automatically switched without depending on the driver's operation. More specifically, the control device 16 causes the shift actuator 15a to shift up the dog transmission 15 based on a shift map that associates at least rotation speeds of the engine 11 with gear stages. Output of the shift actuator 15a drives the operation of the dog transmission 15 without driving the operation of the clutch 14.

Alternatively, the control device 16 can cause the dog transmission 15 to shift up or down in response to, for example, the driver's operation. For example, the control device 16 causes the shift actuator 15a to shift up or down the dog transmission 15 in response to the operation of a shift switch by the driver.

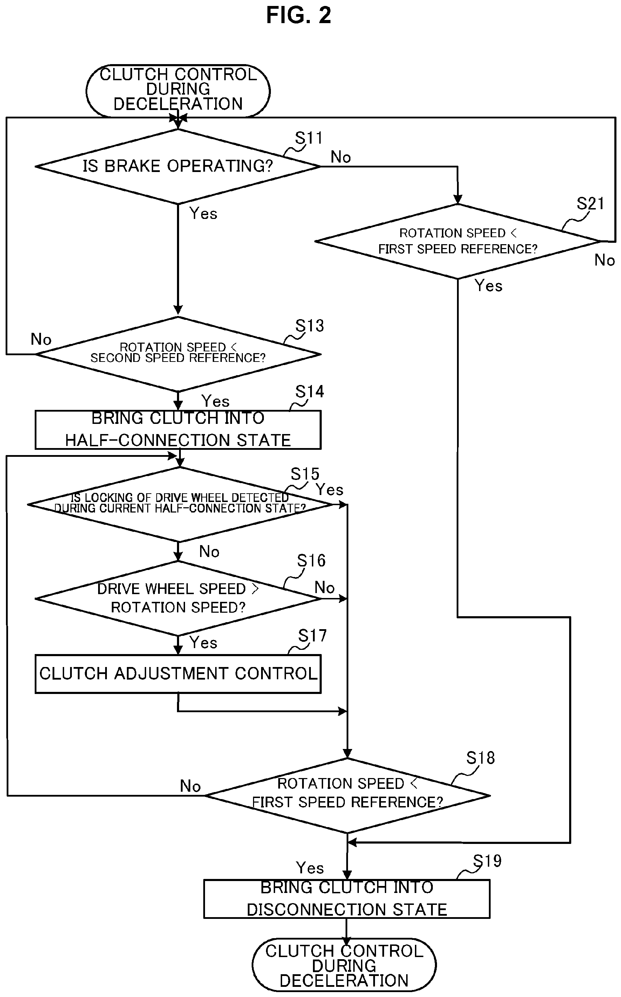

FIG. 2 is a flowchart illustrating clutch control operation during deceleration by the control device shown in FIG. 1.

FIG. 2 shows clutch control operation when the traveling speed of the vehicle 10 decreases.

If the clutch 14 is in the connection state and the drive wheel brake 17 is not operating (No in S11), and if the rotation speed of the engine 11 falls below a first speed reference (Yes in S21), the control device 16 causes the clutch actuator 14a to change the state of the clutch 14 from the connection state to the disconnection state (S19). The first speed reference is set, for example, around an idle rotation speed of the engine 11. The first speed reference is set to, for example, the idle rotation speed of the engine 11.

If the clutch 14 is in the connection state and the drive wheel brake 17 is operating (Yes in S11), and if the rotation speed of the engine 11 falls below a second speed reference (Yes in S13), the control device 16 changes the clutch 14 into the half-connection state (S14). The second speed reference is one example of the predetermined speed reference. The second speed reference is set to, for example, a value greater than the first speed reference. The second speed reference is set to, for example, a value greater than the idling speed of the engine 11. When the drive wheel brake 17 operates, the rotation speed of the engine 11 decreases in accordance with a decrease in the rotation speed of the drive wheel 13. However, when the rotation speed of the engine 11 falls below the second speed reference, the engine 11 continues to rotate due to slip of the clutch 14 in the half-connection state. As a result, the occurrence of a stall of the engine 11 can be prevented.

Subsequently, if the rotation speed of the engine 11 falls below the first speed reference (Yes in S18), the control device 16 causes the clutch actuator 14a to change the state of the clutch 14 from the connection state to the disconnection state (S19).

The control device 16 determines whether the drive wheel 13 is locked during the current half-connection state (S15). If the drive wheel 13 is not locked during the current half-connection state (No in S15), and if the rotation speed of the drive wheel 13 (converted to the engine rotation speed) exceeds an actual rotation speed of the engine 11 (Yes in S16), the control device 16 performs clutch adjustment control (S17). In the clutch adjustment control (S17), the control device 16 causes the clutch actuator 14a to adjust the state of the clutch 14 from the half-connection state toward the connection state so as to increase the engine brake force for the drive wheel 13 by the engine 11. More specifically, the control device 16 causes the clutch actuator 14a to change the state of the clutch 14 from the half-connection state toward the connection state to such an extent that the slip of the clutch 14 stops. That is, the control device 16 changes the state of the clutch 14 from the half-connection state toward the connection state to such an extent that the rotation speed of the drive wheel 13 becomes equal to the rotation speed of the engine 11. The engine brake substantially functions when the slip of the clutch 14 stops. If the rotation speed of the drive wheel 13 exceeds the rotation speed of the engine 11 (Yes in S16), the clutch 14 is slipping. The state where the clutch 14 is slipping is a state where the engine brake for the drive wheel 13 by the engine 11 is not substantially functioning. The clutch adjustment control (S17) adjusts the state of the clutch 14 from the half-connection state toward the connection state, which causes the engine brake for the drive wheel 13 by the engine 11 to substantially function.

If the control device 16 detects locking of the drive wheel 13 during the current half-connection state (Yes in S15), the control device 16 does not perform the clutch adjustment control. That is, if locking of the drive wheel 13 is detected (Yes in S15), even if the rotation speed of the drive wheel 13 (converted to the engine rotation speed) subsequently exceeds the actual rotation speed of the engine 11, the clutch adjustment control is not performed. Thus, the half-connection state of the clutch 14 is maintained.

Subsequently, if, for example, the rotation speed of the engine 11 falls below the first speed reference (Yes in S18), the control device 16 causes the clutch actuator 14a to change the state of the clutch 14 from the connection state to the disconnection state (S19).

The control device 16 ends the clutch control during deceleration shown in FIG. 2 by, for example, bringing the clutch 14 into the disconnection state in step S19. In addition, for example, if a required driving force required as an output of the engine 11 increases and the rotation speed of the engine 11 increases, the control device 16 brings the clutch 14 into the connection state. In this case also, the control device 16 ends the clutch control during deceleration shown in FIG. 2. Then, if the control device 16 causes the clutch actuator 14a to change the state of the clutch 14 to the connection state or disconnection state, for example, the control device 16 releases the maintenance of the half-connection state made in step S22. For example, even when the control device 16 detects a locked state (Yes in S15), if the control device 16 subsequently causes the clutch actuator 14a to change the state of the clutch 14 to the connection state or disconnection state, the control device 16 releases the maintenance of the half-connection state.

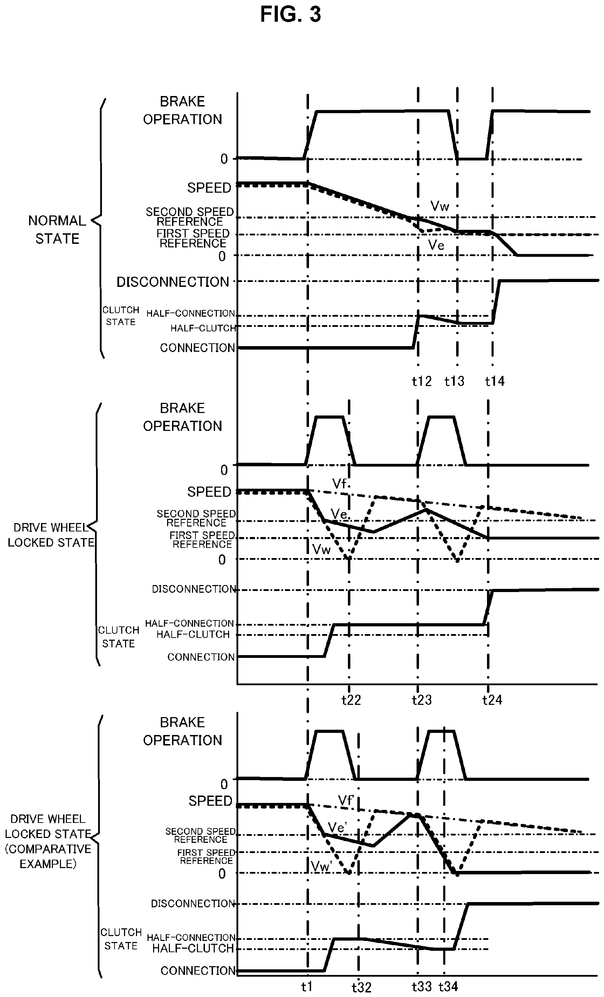

FIG. 3 shows time charts showing one example of the clutch control operation.

The time charts in FIG. 3 show the operation state of each part when the rotation speed of the drive wheel 13 of the vehicle 10 of the present embodiment decreases, for each of a normal state where the drive wheel 13 is not locked and a drive wheel locked state where the drive wheel 13 is locked. More specifically, the brake operation, the speed of the drive wheel, the engine rotation speed, the rotation speed of the non-drive wheel, and the state of the clutch 14 are shown. The speed of the drive wheel 13 and the rotation speed of the non-drive wheel, which have been converted to the rotation speeds of the engine 11 for easy understanding of their relationship with the engine speed, are indicated by the broken lines.

The time charts in FIG. 3 also show, as a comparative example of the present embodiment, the operation of each part when the clutch adjustment control is performed even in a locked state of the drive wheel.

The clutch control operation will be described with reference to the control process in FIG. 2.

In the normal state, for example, from timing t1, the drive wheel brake 17 operates, which causes rotation speed Ve of the engine 11 to decrease. In the normal state, the drive wheel 13 is not locked. Thus, rotation speed Vw of the drive wheel 13 reflects the traveling speed of the vehicle 10. The traveling vehicle 10 has inertia. The inertia of the vehicle 10 significantly affects the traveling speed of the vehicle 10. The rotation speed Vw of the drive wheel 13 decreases relatively slowly as the traveling speed of the vehicle 10 decreases. As the rotation speed Vw of the drive wheel 13 decreases, the rotation speed Ve of the engine 11 also decreases relatively slowly.

When the rotation speed Ve of the engine 11 falls below the second speed reference, the control device 16 causes the clutch actuator 14a to change the state of the clutch 14 from the connection state to the half-connection state (S14 in FIG. 2). The second speed reference is set to be equal to or higher than the idling rotation speed of the engine 11.

The transmission force in the half-connection state of the clutch 14 differs for each individual clutch 14, that is, for each vehicle 10. That is, even when the control causes the clutch plate constituting the clutch 14 to move to a position corresponding to the half-connection state, the transmission force that can be transmitted by the clutch 14, that is, the so-called clutch capacity differs depending on the individual clutch 14. Thus, depending on the individual clutch 14, the so-called loss of engine brake may occur when the clutch 14 slips due to a low transmission force of the clutch 14, and a substantial engine brake force cannot be exerted. When the clutch 14 slips, the rotation speed Vw of the drive wheel 13 becomes higher than the rotation speed Ve of the engine 11, for example, as shown before and after timing t12.

The control device 16 of the present embodiment performs the clutch adjustment control when the rotation speed Ve of the engine 11 is lower than the rotation speed Vw of the drive wheel 13. In the clutch adjustment control, the control device 16 causes the clutch actuator 14a to adjust the state of the clutch 14 from the half-connection state toward the connection state so as to increase the engine brake force for the drive wheel 13 by the engine 11.

For example, the control device 16 performs the clutch adjustment control at timing t12. This changes the state of the clutch 14 from the half-connection state toward the connection state. Thus, the transmission force that can be transmitted by the clutch 14, that is, the so-called clutch capacity increases, and the slip of the clutch 14 starts to converge. That is, an engine brake force is exerted, so that the difference between the rotation speed Ve of the engine 11 and the rotation speed Vw of the drive wheel 13 decreases.

The time chart in FIG. 3 shows an example in which the operation of the drive wheel brake 17 stops at subsequent timing t13, and then the drive wheel brake 17 operates again at subsequent timing t14.

When the rotation speed Ve of the engine 11 falls below the first speed reference, the control device 16 causes the clutch actuator 14a to change the state of the clutch 14 to the disconnection state.

Bringing the clutch 14 in the disconnection state can stop the vehicle 10 while preventing a stall of the engine 11.

Next, the operation in the drive wheel locked state where the drive wheel 13 is locked will be described.

In the drive wheel locked state, for example, from timing t1, the drive wheel brake 17 operates, which causes the rotation speed Ve of the engine 11 to decrease. In the drive wheel locked state, the rotation speed Vw of the drive wheel 13 decreases rapidly as compared to the traveling speed of the vehicle 10. The rotation speed Vw of the drive wheel 13 decreases significantly compared to rotation speed Vf of the non-drive wheel that reflects the traveling speed of the vehicle 10. The non-drive wheel is, for example, the front wheel 12 (see FIG. 1). As the rotation speed Vw of the drive wheel 13 decreases, the rotation speed Ve of the engine 11 also decreases relatively rapidly.

The control device 16 of the present embodiment does not perform the clutch adjustment control after detecting the locked state (Yes in S15 of FIG. 2). That is, the control device 16 causes the half-connection state to be maintained without causing the clutch actuator 14a to adjust the state of the clutch 14 from the half-connection state toward the connection state.

For example, at timing t22, when the operation of the drive wheel brake 17 stops to release the locking of the drive wheel 13, the rotation speed of the drive wheel 13 increases until it becomes substantially equal to the rotation speed Vf of the front wheel 12. Here, if the clutch 14 slips due to a low transmission force of the clutch 14, the rotation speed Vw of the drive wheel 13 exceeds the rotation speed Ve of the engine 11. That is, the rotation speed Ve of the engine 11 becomes lower than the rotation speed Vw of the drive wheel 13. Even in this case, the control device 16 of the present embodiment does not perform the clutch adjustment control. That is, the control device 16 causes the half-connection state to be maintained without causing the clutch actuator 14a to adjust the state of the clutch 14 from the half-connection state toward the connection state.

From subsequent timing t23, the drive wheel brake 17 operates again, which causes the rotation speed Vw of the drive wheel 13 to decrease. The drive wheel 13 enters a locked state, and the rotation speed Vw of the drive wheel 13 decreases significantly compared to the rotation speed Vf of the non-drive wheel. At this moment, the clutch 14 is maintained in the half-connection state without being adjusted from the half-connection state toward the connection state. Thus, the rotation speed Ve of the engine 11 decreases more slowly than the rotation speed Vw of the drive wheel 13.

At subsequent timing t24, when the rotation speed Ve of the engine 11 falls below the first speed reference, the control device 16 causes the clutch actuator 14a to change the state of the clutch 14 from the connection state to the disconnection state (S19 in FIG. 2).

The control device 16 of the present embodiment does not perform the clutch adjustment control after detecting the locked state. Thus, at timing t23, even when the drive wheel brake 17 operates again to bring the drive wheel 13 in a locked state, and the rotation speed Vw of the drive wheel 13 decreases significantly compared to the rotation speed Vf of the non-drive wheel, the rotation speed Ve of the engine 11 decreases slowly. Thus, also in the control in which the clutch 14 is brought into the disconnection state under the condition that the rotation speed Ve of the engine 11 falls below the first speed reference, the clutch 14 is brought into the disconnection state before the rotation speed Ve of the engine 11 falls significantly below the first speed reference. Therefore, it is possible to prevent the occurrence of a stall of the engine 11 due to locking of the drive wheel.

For example, the comparative example in FIG. 3 shows operation in which the clutch adjustment control is performed even after locking of the drive wheel is detected.

In the comparative example, even if locking of the drive wheel by the operation of the drive wheel brake is detected as in the present embodiment, the clutch adjustment control is performed when rotation speed Ve' of the engine 11 becomes lower than rotation speed Vw' of the drive wheel 13. For example, at timing t32, when the rotation speed Ve' of the engine 11 is lower than the rotation speed Vw' of the drive wheel, the state of the clutch is adjusted from the half-connection state toward the connection state. This causes the engine brake to operate.

When the state of the clutch is adjusted from the half-connection state toward the connection state, and at timing t33, for example, the drive wheel is locked again by the operation of the drive wheel brake, the rotation speed Ve' of the engine rapidly decreases with the decrease in the rotation speed Vw' of the drive wheel. Thus, for example, when the clutch is brought into the disconnection state at timing t34 at which the rotation speed Ve' of the engine 11 falls below the first speed reference, the rotation speed Ve' of the engine falls significantly below the first speed reference, which may cause an engine stall.

In contrast, according to the present embodiment, it is possible to prevent the occurrence of a stall of the engine 11 due to locking of the drive wheel 13.

In this manner, in the vehicle 10 of the present embodiment, it is possible to prevent the occurrence of a stall of the engine 11 due to locking of the drive wheel 13 in each of a plurality of operations of the drive wheel brake 17 when in the locked state, while applying an effective engine brake to the drive wheel 13 after release of the operation of the drive wheel brake 17 when in the normal state.

### Reference Signs List

10: vehicle
11: engine
13: drive wheel
14: clutch
14a: clutch actuator
16: control device
17: drive wheel brake
Ve: engine rotation speed
Vw: drive wheel rotation speed (corresponding engine rotation speed of drive wheel)

## Claims

1. A leaning vehicle (10) comprising:
an engine (11) that is configured to output a driving force;
a drive wheel (13) that is configured to rotate by receiving the driving force of the engine (11);
a drive wheel brake (17) that is configured to brake the drive wheel (13);
a clutch (14) that is provided between the engine (11) and the drive wheel (13) and includes a clutch actuator (14a), the clutch (14) being configured to change a state thereof between a connection state and a disconnection state by driving of the clutch actuator (14a); and
a control device (16) that is configured to control the engine (11) and the clutch actuator (14a),
the control device (16) being configured to:
when the state of the clutch (14) is the connection state and the drive wheel brake (17) is operating, cause the clutch actuator (14a) to change the state of the clutch (14) to a half-connection state that is between the connection state and the disconnection state when a rotation speed of the engine (11) falls below a predetermined speed reference;
when the operation of the drive wheel brake (17) ends in the half-connection state of the clutch (14), and the rotation speed of the engine is lower than a corresponding engine rotation speed of the drive wheel (13), perform adjustment control for causing the clutch actuator (14a) to adjust the state of the clutch (14) from the half-connection state toward the connection state so as to increase an engine brake force for the drive wheel (13) by the engine (11); and
after detecting a locked state of the drive wheel (13) when the drive wheel brake (17) is operating, cause the half-connection state to be maintained without causing the clutch actuator (14a) to adjust the state of the clutch (14) from the half-connection state toward the connection state.

2. The leaning vehicle (10) according to claim 1, wherein
the control device (16) is configured to, when the control device (16) causes the clutch actuator (14a) to change the state of the clutch (14) to the connection state or disconnection state after detecting the locked state, release the maintenance of the half-connection state in the state of the clutch (14).
